(19) Europäisches Patentamt
European Patent Office
Office européen des brevets

(11) Publication number: **0 661 558 A1**

(12) **EUROPEAN PATENT APPLICATION**

(21) Application number: **94120063.6**

(22) Date of filing: **17.12.94**

(51) Int. Cl.[6]: **G02B 1/10**, C03C 17/00, C08G 79/00

(30) Priority: **29.12.93 US 174824**

(43) Date of publication of application: **05.07.95 Bulletin 95/27**

(84) Designated Contracting States: **DE FR GB IT NL**

(71) Applicant: **MINNESOTA MINING AND MANUFACTURING COMPANY**
**3M Center,**
**P.O. Box 33427**
**St. Paul,**
**Minnesota 55133-3427 (US)**

(72) Inventor: **Weller-Brophy, Laura A., c/o**
**Minnesota Mining and**
**Manufac. Co.,**
**2501 Hudson Road,**
**P.O. Box 33427**
**Saint Paul,**
**Minnesota 55133-3427 (US)**

(74) Representative: **Meyers, Hans-Wilhelm, Dr. et al**
**Deichmannhaus am Hauptbahnhof**
**D-50667 Köln (DE)**

(54) **Polymer-ceramic sol gel.**

(57) A polymer-ceramic sol-gel composition comprises one or more metal alkoxides reacted with (1) a silane-modified polymer with an incorporated fluorocarbon surfactant, or (2) a fluoropolymer, to produce (upon deposition to a substrate) optically transparent, smooth thin films suitable for waveguide applications.

EP 0 661 558 A1

## FIELD OF THE INVENTION

This invention describes a polymer-ceramic sol gel composition of one or more metal alkoxides reacted with a silane-modified polymer and fluorocarbon surfactants. The composition can be deposited onto substrates to produce optical quality, transparent films.

## DESCRIPTION OF RELATED ART

Planar and channel optical waveguide components and integrated optical systems, which are based on or incorporate passive optical waveguides and waveguide components, currently are used in the telecommunication, computer, and medical industries. Typical integrated optical systems include wavelength (de)multiplexers, optical couplers and splitters, waveguide grating sensors, Mach-Zehnder interferometers, integrated optical heads for optical data storage, and spectrum analyzers.

Many inorganic, organic, and hybrid thin films for optical waveguides have been described. See, e.g., *Topics in Applied Physics* (vol. 7, "Integrated Optics"), 202-16 (1979). For thin films to be useful for passive optical waveguide applications, they should have refractive indices from 1.4 to 2.0, have coating thicknesses from 0.05 to 10 µm, and have surface roughnesses of no more than about 3 nm root mean squared (rms). (By rms, it is meant the square root of the square of the mean distance between the peaks and valleys of the film surface.) These films also must be optically transparent, adhere well to substrates being coated, resist scratching, and possess environmental and temporal stability. Additionally, any thermally-induced change in refractive index (dn/dT) must be sufficiently small that the specified performance of the integrated optical device is maintained. Films having these characteristics must be deposited by chemical and thermal processes that will not damage over-and/or underlying materials.

Silica-based inorganics, commonly used in passive optical waveguide applications, satisfy the requirements listed above. However, processing temperatures required to produce thin films which are fully dense range from 400° to 1100°C, depending on the composition of the film. Such processing temperatures are excessive for thin films applied to articles such as polymer substrates, multilayer devices incorporating diffused index structures, semiconductor lasers, organic light emitting elements, and nonlinear organic and/or inorganic materials. For such articles, materials that can be processed at temperatures below about 200°C typically are required. Polymers cured by heat or radiation are commonly used in such applications. However, commercially available polymers do not possess the desired refractive indices, thermal expansion coefficients, and sufficiently small thermally-induced changes in refractive indices for many optical waveguide applications.

Hybrid materials combine the low processing temperatures of polymers with the optical properties of multicomponent oxide glasses and are optimal materials for optical waveguide applications. Several methods have been used to fabricate hybrid films.

One method involves infiltration of an organic or inorganic component into a porous layer of the other. One version of this method involves the infiltration of a polymeric material into a porous ceramic that has been fabricated by sol-gel techniques. Such a polymer-in-ceramic composite consists of two materials which may have very dissimilar thermal properties, including thermal expansion coefficients. This can lead to formation of voids or cracks in the composite. Other problems can also occur. Shrinkage differences between the polymerized materials and the glassy matrix can lead to optically opaque materials. The refractive indices of the final thin film and the ceramic matrix must be approximately the same because any differences (between the refractive indices of the matrix and infiltrate) produce optical scattering in the resultant composite. Also, surface chemistry reactions which can occur between the inorganic material and the pore surfaces of the glass can limit the organic material which may be introduced into the glassy matrix. D. Avnir et al., *J. Non-Crst. Sol.*, **74**, 395-406(1985); J.M. Boulton et al., *Mat. Res. Soc. Symp. Proc.*, **180**, 987-93 (1990).

Another version of this method involves the infiltration of metal alkoxides into rubbery polymers. The metal alkoxides subsequently hydrolyze to form a glassy "infiltrate". Limitations are similar to those listed above although additional problems can exist. These include chemical modification of the polymer during hydrolysis of the metal alkoxide as well as incomplete hydrolysis and condensation of the metal alkoxide (since the processing temperatures required to achieve full glass densification are well above the decomposition temperatures of the organic materials).

A second method involves physically blending solutions of polymers and inorganic compounds (or precursors thereof) to produce organic-inorganic hybrid materials. More particularly, polymer precursors are blended with partially hydrolyzed sol-gel solutions. Production of optically transparent materials depends upon the miscibility of the blend, with immiscible systems producing opaque materials. Production of optical

quality thin films with minimal surface roughness by this method has yet to be reported.

A third method for the synthesis of a polymer-ceramic composite is described in, for example, U.S. Patent No. 5,109,080. A polymer is covalently bonded to a prehydrolyzed metal alkoxide. More particularly, a silane-modified polyether ketone, having a high refractive index, and tetraethylorthosilicate (TEOS) are reacted to prepare hybrid glasses with high refractive indices that can be cured at temperatures between 110° and 150°C.

Simultaneous hydrolysis and condensation of silane-modified polymer and metal alkoxide in the preparation of silica-based polycerams is described by J.M. Boulton et al., *Mat. Res. Soc. Symp. Proc.*, **180,** 773 and 987-93 (1990). Materials produced by the described sol-gel process incorporate no more than 25% (by vol.) ceramic, and thin films spin-coated from the resulting sol-gel solutions are of poor optical quality.

Surface roughness can develop during deposition of sol-gel polymerceramics. In films spin-coated from solutions that have 15 to 20 weight percent solids, this roughness is due to the formation of Beynard cells; in films spin-coated from less viscous solutions, roughness is due to the formation of surface striae (i.e., Beynard cells which have elongated during spin-coating). Formation of Beynard cells can be controlled to an extent through spin-coating in a saturated solvent environment followed by a very slow drying of the film. This technique results in films which are quite porous and which have unacceptably high light propagation losses.

## SUMMARY OF THE INVENTION

In one aspect, the present invention provides a method of preparing a polymer-ceramic sol-gel hybrid material comprising the steps (a) hydrolyzing at least one alkoxide of a Group IV element diluted in an acidified solvent followed by adding to the hydrolyzed alkoxide one of (b) or (c): (b) a silane-modified polymer and from more than 0 to 10% (by wt. based on total solids content) of a fluorochemical surfactant or (c) a silane-modified fluoropolymer. The present invention also provides the polymer-ceramic sol gel hybrid material obtained from this method.

In another aspect, the present invention provides a method of preparing a substantially crack-free polymer-ceramic film having an average surface roughness of less than 5 nm, comprising the steps of applying to a substrate a coating of the hybrid material described above, optionally allowing the coating to condense, and heating the coating at a temperature from 25° to 150°C.

In a still further aspect, the present invention provides the composite structure derived from the above method.

In this application, the following definitions apply:

"polyceram" or "polyceramic material" or "polymer-ceramic hybrid material" means a material comprised of a polymeric chain crosslinked to at least one other polymeric chain via an oxygen-Group IV element linkage, the morphology of the resulting solid being uniform on a submicron scale so that optical scattering is substantially reduced upon light propagation therethrough;

"fluorochemical surfactant" means a compound, having at least one carbon to fluorine bond, which reduces the surface tension of a film formed from a composition including such a compound;

"fluoropolymer" means a polymer material containing at least one carbon to fluorine bond;

"Group IV" means those elements in Periodic Table Groups IVA and IVB (CAS version) including Ti, Zr, Hf, C, Si, Ge, Sn, and Pb; and

"group" or "compound" or "polymer" means a chemical species that allows for substitution by conventional substituents which do not interfere with the desired product.

The present invention teaches a polymer-ceramic hybrid, and a method for the preparation thereof, from which can be produced smooth, optically transparent thin films suitable for waveguide applications. The composition comprises a polymer-ceramic sol-gel of one or more alkoxides of a Group IV element reacted with one or more silane-modified fluoropolymers or with one or more silane-modified polymers and a fluorochemical surfactant. Refractive indices of thin films produced from this composition can be adjusted between 1.37 and 1.90, depending on the relative amounts of metal alkoxides and silanemodified polymer(s) used.

Use of a fluoropolymer or a fluorochemical surfactant to produce smooth, crack-free films of optical quality from a polymer-ceramic sol-gel composition has not been described. Substantially crack-free, single-layer films having a thickness of 0.05 to 5 $\mu$m, an average surface roughness of less than 5 nm, and densities approaching the theoretical maximum can be produced with thermal processing temperatures of 150°C or less. In contrast, multicomponent oxide films produced by the typical sol-gel method require processing temperatures in excess of 400°C to reach full density, i.e., to consolidate to such a point that

the density is that predicted for a solid of the given oxide composition (with no residual solvent). Optical waveguides incorporating films prepared according to the method of the present invention are "low loss" (i.e., have a propagation loss of less than 10 dB/cm).

DETAILED DESCRIPTION OF PREFERRED EMBODIMENTS

Polymer-ceramic material compositions of the present invention are synthesized using a sol-gel process wherein one or more metal alkoxides and one or more silane-modified polymers or fluoropolymers are co-hydrolyzed to produce a miscible, homogeneous mixture.

The hydrolysis and condensation reactions of the sol-gel method are well known and may be written as follows:

$$M{-}(OR)_n + n\ H_2O \rightarrow M\text{-}(OH)_n + n\ ROH$$

$$M{-}(OH)_n + n\ MOH \xrightarrow{-y\ H_2O} MO_{n-y}$$

where R represents an alkyl group and M is a Group IV element. (For a further description of these reactions, see Brinker and Scherer, *Sol–Gel Science: The Physics and Chemistry of Sol–Gel Processing*, Academic Press, Inc. (1990).) By adjusting the pH of the solution to 4.0 or lower, preferably 1.0 ≦ pH ≦ 2.0, where a less than stoichiometric amount of water has been used, these reactions produce sol-gel materials which are composed of crosslinked networks rather than colloidal particles.

Production of polymer-ceramic hybrid materials is based upon the above sol-gel process and can be written as

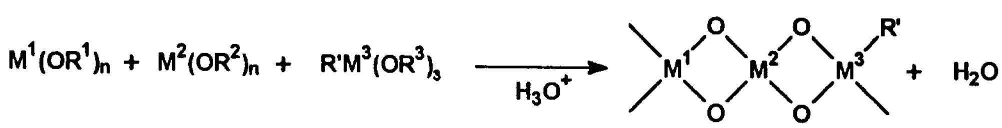


wherein $R^1$, $R^2$, and $R^3$ represent alkyl groups that can be the same or different; $M^1$, $M^2$, and $M^3$ are Group IV elements that can be the same or different; and R' is a polymer, preferably one which has a weight average molecular weight of about 10,000 or less.

Alkoxides useful in the present invention are based on Group IV elements, especially silicon (Si), germanium (Ge), and titanium (Ti). The organic portions of the alkoxides are alkyl groups having from 1 to 10, preferably 1 to 4, carbon atoms. Common examples include methyl, ethyl, propyl, isopropyl, and *n*-butyl groups. Preferred alkoxides of Group IV elements include TEOS, tetramethylorthosilicate (TMOS), titaniumisopropoxide (TIPT), tetra(*n*-butyl)titanate (TNBT), and germanium(IV) ethoxide.

Polymeric moieties useful in the present invention (as R' groups) include, but are not limited to, those derived from ethyleneoxide urethanes and ethyleneimines modified with trimethoxysilylpropyl or triethoxysilylpropyl groups. Illustrative examples of such silane-modified polymers include trimethoxysilylpropyl-substituted polyethyleneimine (MPEI) and trimethoxysilylpropyl-substituted polyethyleneoxide urethane (MPEOU), commercially available from Hüls America, Inc. (Piscataway, NJ).

Fluoropolymers useful in the present invention include, but are not limited to, mono- and di-functionalized derivatives of perfluoropoly(ethylene oxide). The preparation of these fluoropolymers is taught in U.S. Patent No. 5,274,159, particularly Example 7. In general, they can be prepared by reacting a perfluoropolyether ester with an aminoalkylalkoxysilane. After the alcohol byproduct and any unreacted aminosilane have been removed, the reaction product can be mixed with a polyoxyalkylene alcohol and distilled under heat.

The preferred order of reaction is hydrolysis of alkoxide(s) followed by addition of silane-modified fluoropolymer or of silane-modified polymer and fluorochemical surfactant. The alkoxide(s) preferably is hydrolyzed first because it is often less reactive than the silane-modified polymer or fluoropolymer. Hydrolysis of the alkoxide(s) preferably occurs in solvent, more preferably an alcoholic solvent, most preferably in ethanol, methanol, isopropanol, or a mixture thereof, which has been acidified to a pH between

0 and 4, preferably between 1 and 2, before addition of alkoxide. Useful acids include, but are not limited to, dilute or concentrated acids such as HCl and $HNO_3$ as well as organic acids such as 2,4-pentanedione. The resulting mixture can be stirred and heated to between 60° and 90°C for 0 to 120 minutes, preferably 0 to 60 minutes, to accelerate linear network formation via hydrolysis. Where more than one alkoxide is used, the alkoxides are preferably hydrolyzed separately and then mixed in whatever ratio of $M^1$ to $M^2$ is desired.

Silane-modified polymer or fluoropolymer is added to the hydrolyzed metal alkoxide(s) in a range of from 1:1000 to 1000:1 (polymer to alkoxide), preferably from 1:9 to 9:1, more preferably from 3:7 to 7:3. Prior to addition, the polymer can be diluted in a solvent such as an alcoholic (e.g., ethanol or isopropanol), chlorinated (e.g., 1,1,2-trichlorotrifluoroethane, commercially available as Freon™ 113, DuPont de Nemours Co., Wilmington, DE), or fluorinated solvent (e.g., trifluoroethanol), optionally in combination with other solvents such as, for example, dimethylformamide (DMF), tetrahydrofuran (THF), or pyridine. Addition of the silane-modified polymer or fluoropolymer after the alkoxide has had an opportunity to form linear chains in solution (i.e., after allowing the above hydrolysis reaction to proceed for at least 60 min.) has been observed to increase the shelf life of the sol-gel solution.

Although addition of fluorochemical surfactant is not necessary where the silane-modified polymer used is a fluoropolymer, fluorochemical surfactant can be added directly to the alkoxide-polymer mixture. Preferably, the fluorochemical surfactant is diluted in one of the same solvents described above. The concentration of surfactant in the alkoxide - polymer solution can range from more than 0 up to 10% (by wt., based on total solids content), preferably 2 to 6% (by wt.). The solution can be stirred for 0 to 120 minutes, preferably 5 to 15 minutes. (The synthesis is further described in the examples which follow.) Compounds useful as fluorochemical surfactants include fluorinated polymeric esters and perfluoro alkyl-bearing poly(oxyethylene). Preferably, the surfactant is non-ionic. Examples of such non-ionic fluorochemical surfactants include FC™-430, FC™-170C, and FC™-171 (3M; St. Paul, MN).

The resulting polymer-ceramic hybrid solutions do not bead and are readily applied as continuous films onto most substrates. Useful substrate materials include, but are not limited to, glass and quartz (including optical fibers), silicon, $LiNbO_3$, and a variety of commercially available polymers such as polyesters, polycarbonates, polyurethanes, and polyimides. Thin film layers may be applied by a variety of well known techniques such as spin coating, Mayer bar application, and dip coating. Preferred thicknesses of such films range from 0.05 to 5 $\mu$m, although the thickness of a given film will be determined by the particular application for which it will be used. After a thin film has been applied, it is allowed to gel and condense at room temperature and ambient humidity for up to several months, preferably from 0.1 to 48 hours. Following condensation, the coated sample is densified by baking (e.g., on a hot plate or in an oven or furnace) at temperatures up to 150°C. This baking, which preferably lasts from 30 minutes up to several days, produces an optically transparent thin film which is hard, durable, smooth, and of virtually full density, preferably at least 95% of the theoretical maximum density, more preferably 98% of the theoretical maximum coated on a substrate. (The densification of the film can be monitored by, for example, measuring changes in the refractive index of the film.) The relatively low processing temperature permits the application of these films to polymeric substrates which might be damaged by the higher processing temperatures required by typical $SiO_2$ and multicomponent oxide sol-gel coatings.

Without wishing to be bound to a particular theory, the fluoropolymer or fluorochemical surfactant is believed to reduce the surface tension of the sol-gel solution and, when used in the proper concentration, eliminate Beynard cell formation. Further, reacting the various components in the order described helps to prevent the hydrolysis/condensation reactions from leading to rapid precipitation of one or more of the components. Careful control of the solution acidity and the amount of water present also helps to prevent such undesirable side reactions. Addition of an appropriate surfactant or fluoropolymer can reduce thin film (average) surface roughness from more than 14 nm to about 5 nm, preferably to about 3 nm or less. This reduction is highly desirable since a rms surface roughness of more than 5 nm can lead to excess waveguide loss due to light scatter at thin film interfaces. Where a composite structure includes an optically transparent film having a rms surface roughness of about 5 nm or less, it can be used as an optical waveguide. Such waveguides are useful in optical sensors (e.g., surface plasmon biosensor) and in the communications industry as passive waveguide components.

The above-described films are also useful as protective, abrasion- and stain-resistant coatings.

Objects and advantages of this invention are further illustrated by the following examples. However, the particular materials and amounts described, as well as other conditions and details, should not be construed so as to unduly limit this invention.

EXAMPLES

Example 1

This example describes the preparation of a nominally 33% $SiO_2$/67% polymer (by vol.) sol-gel and a thin film prepared therefrom.

Step 1: Prehydrolysis of 16% (by wt.) $SiO_2$ and Addition of Polymer

To 13.737 g reagent alcohol was added 1.846 g 0.1N HCl, and the solution was stirred. A 20.024 g portion of TEOS (Aldrich Chem. Co.; Milwaukee, WI) was added, and the solution was again stirred. In a partially covered beaker, the solution was heated (50° to 60°C) for about an hour and cooled to room temperature before 5.010 g MPEI (Hüls America, Inc.) was added. The solution was stirred for an additional 5 to 10 minutes.

Step 2: Incorporation of Surfactant

FC™-430 fluorochemical surfactant (3M) was diluted with absolute reagent alcohol (Mallinckrodt Specialty Chemicals Co.; Paris, KY) in a weight percent ranging from 0 to 4%. This mixture was added to the sol-gel solution from Step 1 in a weight ratio of approximately 1 part dilute surfactant to 3 parts sol-gel solution. This produced a sol-gel solution incorporating between 0 and 6.5% (by wt., based on the total calculated solids content of the solution) surfactant.

Step 3: Thin Film Deposition, Processing, and Testing

The sol-gel solutions were filtered to 0.2 µm and spin-coated at 2000 rpm onto glass and quartz microscope slides. The coated slides were air dried, at room temperature, for time periods ranging from several days to several months. (Other experiments showed that heating at temperatures up to 150°C resulted in more rapid densification.)

Final film thicknesses were on the order of 1.0 to 1.5 µm and film refractive indices were approximately 1.475. Surface roughness was measured on a DEKTAK™ 3030 surface profile measuring system (Sloan Technology Corp.; Santa Barbara, CA) using a 0.5 mm scan rate and a 2 mg weighted stylus. Automatic leveling was employed, although no correction for thickness variations in the glass and quartz substrates was made. Nine scans were taken for each data point. The measured average roughness of $SiO_2$-MPEI thin films as a function of FC™-430 surfactant concentration is shown below in Table I. (Surfactant concentration was calculated as a function of the total estimated solids content of the sol-gel solution, based upon composition.)

TABLE I

| Wt. percent of surfactant (based on solids) | Average Roughness (nm) |
|---|---|
| 0 | 17.2 ± 4.5 |
| 0.78 | 13.3 ± 3.9 |
| 1.4 | 8.6 ± 3.4 |
| 4.4 | 5.6 ± 3.1 |
| 6.5 | 5.6 ± 3.0 |

Typical thin films had surface roughnesses on the order of 5 nm (approximately the roughness of the glass substrates) with a reduction in the amount of surfactant used leading to an increase of roughness due to surface striation.

Example 2

This example describes the preparation of a nominally 40% (by vol.) $TiO_2$/60% (by vol.) polymer sol-gel and a thin film made therefrom.

Step 1: Prehydrolysis of 16% (by wt.) $TiO_2$ and Addition of Polymer

To 5.912 g reagent alcohol was added 1.132 g concentrated HCl, and the solution was stirred. A 14.934 g portion of TNBT (Johnson Matthey Electronics; Ward Hill, MA) was added dropwise, with stirring. Thereafter, 3.105 g MPEI was added, and the solution was stirred for an additional 5 to 10 minutes.

Step 2: Incorporation of Surfactant

The same fluorochemical surfactant as was used in Example 1 was diluted with reagent alcohol in a weight percent ranging from 0.6 to 3%. This mixture was added to the sol-gel solution from Step 1 in a weight ratio of approximately 1 part dilute surfactant to 3 parts sol-gel solution. This produced a sol-gel solution incorporating between 1 and 4.8% (by wt., based upon the total calculated solids content of the solution) surfactant.

Step 3: Thin Film Deposition, Processing, and Testing

The sol-gel solutions were filtered to 0.2 $\mu$m and spin-coated at 2000 rpm onto glass and quartz slides. The coated slides were air-dried at 70 °C for 1 to 24 hours.

Final film thicknesses were on the order of 1.0 to 1.5 $\mu$m and film refractive indices were approximately 1.80. Surface roughnesses were measured as in Example 1. The data, compiled in Table II, show the influence of surfactant concentration on the surface roughness of $TiO_2$-MPEI films. (Surfactant concentration was calculated as a function of total estimated solids content of the sol-gel solution, based upon composition.)

TABLE II

| Wt. percent of surfactant (based on solids) | Average Roughness (nm) |
|---|---|
| 1 | 12.8 ± 1.9 |
| 2 | 7.3 ± 2.7 |
| 2.9 | 5.6 ± 1.1 |
| 3.8 | 2.7 ± 1.9 |
| 4.8 | 6.2 ± 1.2 |

The surface roughness of films incorporating 3.8% (by wt.) FC™-430 was on the order of 3 nm, with lower surfactant concentrations leading to an increase of roughness due to surface striation. Increasing surfactant concentration led to increased roughness, apparently due to reduced surface adhesion and pinholing.

Example 3

This example describes the preparation of nominally 40 - 60% (by vol.) $SiO_2$-$TiO_2$/60 - 40% (by vol.) polymer sol-gels and thin films prepared therefrom.

Step 1: Prehydrolysis of 16% (by wt.) Solids $SiO_2$-$TiO_2$ and Addition of Polymer

The hydrolysis procedures from Examples 1 and 2 were used to separately hydrolyze the $SiO_2$ and $TiO_2$. The prehydrolyzed TEOS and TNBT solutions were mixed in weight ratios (of TEOS to TNBT) of from 0:1 to 1:0 to provide thin film materials with refractive indices ranging from about 1.45 to more than 1.80. (When mixing the two hydrolyzed solutions, adding the hydrolyzed TEOS solution to the hydrolyzed TNBT

solution was found to be preferred.)

The materials described below in Table III constituted approximately 10 g of prehydrolyzed SiO2-TiO2. To each 10 g solution was added about 1.42 g MPEI. Each solution was then stirred from 5 to 10 minutes.

Step 2: Incorporation of Surfactant

The same fluorochemical surfactant as used in Example 1 was diluted with reagent alcohol to a concentration of approximately 2.4% (by wt.). This mixture was added to the sol-gel solution from Step 1 in a weight ratio of approximately 1 part dilute surfactant to 3 parts sol-gel solution. This produced sol-gel solutions incorporating approximately 4% (by wt., based upon the total calculated solids content of the solution) surfactant.

Step 3: Thin Film Deposition, Processing, and Testing

The sol-gel solution was filtered to 0.2 µm and spin-coated at 2000 rpm onto glass and quartz slides. The coated slides were dried on a hot plate at 70° to 75°C for about 90 minutes before being air dried for about 18 hours. The slides were then dried for about an hour in a convection oven at 75°C before being allowed to cool to room temperature.

Final film thicknesses were on the order of 0.75 to 1.0 µm, and film refractive indices ranged from 1.47 to 1.81, as indicated in Table III. Refractive indices were calculated according to the formula,

$$n = V_{Si}n_{Si} + V_{Ti}n_{Ti} + V_{MEPI}n_{MPEI}$$

where $V_{Si}$ is the volume fraction of $SiO_2$, $V_{Ti}$ is the volume fraction of $TiO_2$, $V_{MPEI}$ is the volume fraction of MPEI, $n_{Si}$ is the refractive index of $SiO_2$, $n_{Ti}$ is the refractive index of $TiO_2$, and $n_{MPEI}$ is the refractive index of MPEI. (This formula is consistent with those commonly used in the calculation of the refractive indices of multi-component oxide glasses. The calculated values are only approximate, with the calculated indices most accurate for only one measurement wavelength, because the materials were dispersive.) Refractive index values of 1.46, 2.10, and 1.48 for $SiO_2$, $TiO_2$, and MPEI, respectively, were used in the above calculation.

The measured thickness and refractive index values were determined using two, independent measurement techniques. Initial measurements were made using UV-visible transmission spectroscopy. (Negligible film absorption and scattering were assumed.) The values listed were averaged over the 400 - 700 nm spectral range. A second set of measurements was made using prism coupling techniques for $\lambda$ = 632.8 nm. Both sets of measurements yielded comparable results and have been averaged, except where noted.

The refractive indices (measured and calculated) and average surface roughness of $SiO_2$-$TiO_2$/MPEI thin films as a function of material composition are listed in Table III. Compositions were calculated based upon the relative amounts of starting materials and did not include contributions due to surfactant. Exactly how much residual surfactant remained in the films following aging/thermal processing was uncertain.

The surface roughness of a typical thin film incorporating approximately 4% (by wt.) surfactant was on the order of 3 nm, with some variation as a function of material composition.

These samples were not prepared in a clean environment. Preparation of samples in a clean environment is expected to produce coated articles that have surface rougnesses equal to or less than the smallest values reported herein.

TABLE III

| Vol. % $SiO_2$ | Vol. % $TiO_2$ | Vol. % MPEI | Refractive Index (measured) | Refractive Index (calculated) | Avg. roughness (nm) |
|---|---|---|---|---|---|
| 33 | 0 | 67 | 1.475 ± 0.005[a] | 1.475 | |
| 53.5 | 7.5 | 39 | 1.490 ± 0.005[a] | 1.516 | 3.3 ± 1.4 |
| 43 | 16 | 41 | 1.570 ± 0.004[a] | 1.571 | 4.5 ± 1.7 |
| 37.2 | 20.7 | 42.1 | 1.610 ± 0.004 | 1.601 | 2.9 ± 1.1 |
| 30.7 | 25.4 | 43.9 | 1.63 ± 0.01 | 1.631 | 2.5 ± 1.4 |
| 16.5 | 36.5 | 47 | 1.69 ± 0.01 | 1.700 | 6.3 ± 2.4 |
| 0 | 40 | 60 | 1.81 ± 0.01 | 1.728[b] | 2.7 ± 1.8 |

[a] UV-Vis measurement only

[b] The measured refractive index of the 0% $SiO_2$/40% $TiO_2$/60% MPEI composition was substantially greater than that calculated. At least two reasons may be postulated for the large difference: 1) the synthesized composition was not as calculated, and/or 2) the $TiO_2$ existed, at least in part, in the anatase or rutile form. The latter assumption is supported by the following modification: using 2.305 as the refractive index for $TiO_2$, a calculated refractive index of 1.81 is obtained.

Example 4

This example describes the preparation of a nominally 33% (by vol.) $SiO_2$/67% (by vol.) fluoropolymer sol-gel and a thin film prepared therefrom.

Step 1: Prehydrolysis of 16% (by wt.) $SiO_2$

To 3.857 g reagent alcohol (Mallinckrodt) was added 0.502 g 0.1 N HCl, and the solution was stirred. To this solution was added 5.643 g TEOS, and the mixture was again stirred.

Step 2: Dilution of Fluoropolymer and Incorporation with Prehydrolyzed TEOS

To 5.051 g 1,1,2-trichlorotrifluoroethane, HPLC grade (Adrich Chemical Co.; Milwaukee, WI) was added 0.999 g silane-modified perfluoropoly(ethylene oxide), the preparation of which is described in U.S. Ser. No. 08/019,069. A 5 g aliquot of this mixture was mixed with about 5 g of the prehydrolyzed TEOS from Step 1, while being stirred. This produced a sol-gel which was bottled and allowed to age one day.

Step 3: Thin Film Deposition, Processing, and Testing

The sol-gel composition from Step 2 was filtered to 0.2 µm and spin-coated at 2000 rpm onto glass microscope slides. These coated slides were air dried at room temperature for one day and then at 70 °C in a convection oven for about 45 minutes.

The thicknesses and refractive indices of the thin films were determined by UV-Vis transmission spectroscopy measurements (assuming negligible film absorption and scattering) of two samples coated from the same sol-gel compostion. The samples had film thicknesses of 0.75 and 0.80 µm and refractive indices of 1.42 and 1.40, respectively. (These values were averaged over the 400 to 700 nm spectral range.)

The data from the above examples show that these films have thicknesses, refractive indices, and surface roughnesses that make them useful in waveguide applications.

Various modifications and alterations of this invention which do not depart from the scope and spirit of this invention will become apparent to those skilled in the art. This invention is not to be unduly limited to the illustrative embodiments set forth herein.

## Claims

1. A method of preparing a polymer-ceramic sol gel hybrid material comprising the steps:
   a) hydrolyzing at least one alkoxide of a Group IV element diluted in an acidified solvent; followed by one of b) and c):
   b) adding to said hydrolyzed alkoxide
      1) a silane-modified polymer, and
      2) more than zero and up to 10 weight percent, based on total solids content, of a fluorochemical surfactant; or
   c) adding to said hydrolyzed alkoxide a silane-modified fluoropolymer, said material being curable to a smooth, optically transparent film.

2. The method of claim 1 wherein at least one of the following is true:
   said alkoxide is tetraethylorthosilicate, tetramethylorthosilicate, titaniumisopropoxide, tetra(*n*-butyl)titanate, or germanium(IV) ethoxide; and
   said at least one alkoxide is a mixture of two or more alkoxides, said two or more alkoxides optionally being hydrolyzed separately before being mixed.

3. A polymer-ceramic hybrid material prepared according to the process of claim 1.

4. A polymer-ceramic sol gel hybrid material comprising:
   a) the reaction product of
      1) the hydrolysis product of at least one alkoxide of a Group IV element, and
      2) a silane-modified polymer;
   and
   b) more than zero to 10%, by weight based on total solids content, of a fluorochemical surfactant.

5. The hybrid material of claim 4 wherein at least one of the following is true:
   said alkoxide is selected from the group consisting of tetraethylorthosilicate, tetramethylorthosilicate, titaniumisopropoxide, tetra(*n*-butyl)titanate, or germanium(IV) ethoxide; and
   said silane-modified polymer is a polyethyleneoxide urethane or a polyethyleneimine modified with a silicon-containing group selected from the class consisting of trimethoxysilylpropyl and triethoxysilylpropyl.

6. The hybrid material of claim 4 wherein at least one of the following is true:
   said fluorochemical surfactant is present in an amount of from 2 to 6 weight percent of said hybrid material; said fluorochemical surfactant is a fluoroaliphatic polymeric ester or perfluoropoly(oxyethylene) comprising at least one alkyl group; and
   said fluorochemical surfactant is non-ionic.

7. A polymer-ceramic sol-gel hybrid material comprising the reaction product of:
   a) the hydrolysis product of at least one alkoxide of a Group IV element, and
   b) a silane-modified fluoropolymer.

8. A method of preparing a composite structure comprising a substantially crack-free polymer-ceramic film on a substrate, said film having an average surface roughness of less than 5 nm, comprising the steps:
   a) applying to a substrate a coating of a hybrid material prepared by
      1) hydrolyzing at least one alkoxide of a Group IV element diluted in an acidified solvent; followed by one of 2) and 3):
      2) adding to said hydrolyzed metal alkoxide
         (a) a silane-modified polymer, and
         (b) more than zero to 10 weight percent, based on total solids content, of a fluorochemical surfactant; or
      3) adding to said hydrolyzed alkoxide a silane-modified fluoropolymer;
   b) heating said coating at a temperature from 25° to 150°C to form a film; and
   c) allowing said coating of a hybrid material to gel before being heated.

9. The method of claim 8 wherein at least one of the following is true: said film has an average surface roughness of about 3 nm or less; said film has a density of at least 95% of the theoretical maximum; and said film is optically transparent.

10. A composite structure prepared according to the method of claim 8, said composite structure being an optical waveguide.

European Patent Office

# EUROPEAN SEARCH REPORT

Application Number
EP 94 12 0063

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-5 037 871 (JONES)<br>* claims 1,8 *<br>--- | 1-10 | G02B1/10<br>C03C17/00<br>C08G79/00 |
| Y<br>D | WO-A-91 08241 (VIRGINIA TECH)<br>& US-A-5 109 080<br>* example 3 *<br>--- | 1-10 | |
| A | US-A-5 130 397 (ZEIGLER)<br>* claims 1,2,20 *<br>--- | 1 | |
| A | US-A-5 268 198 (YAMASAKI ET AL)<br>* claim 1 *<br>--- | 1 | |
| A | EP-A-0 548 775 (CENTRAL GLASS)<br>* claim 1 *<br>----- | 1 | |

TECHNICAL FIELDS SEARCHED (Int.Cl.6)

G02B
C03C
C08G
C09D

The present search report has been drawn up for all claims

| Place of search | Date of completion of the search | Examiner |
|---|---|---|
| THE HAGUE | 26 April 1995 | Lentz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document